# EUROPEAN PATENT APPLICATION

(11) **EP 1 734 457 A2**
(43) Date of publication of application: **20.12.2006**
(21) Application number: 06114912.6
(22) Date of filing: 02.06.2006
(51) Int. Cl.: G06F 17/30

(54) **Browsing method and apparatus using metadata**

(30) Priority: 09.06.2005 KR 20050049442
(71) Applicant: SAMSUNG ELECTRONICS CO., LTD., Suwon-si, Gyeonggi-do 442-742 (KR)
(72) Inventor: Kim, Yong-sung, Yeongtong-gu, Suwon-si Gyeonggi-do (KR)
(74) Representative: Robinson, Ian Michael

(57) **Abstract**

A browsing method and apparatus using metadata are disclosed. In the browsing method, multimedia content and metadata about the multimedia content are stored. The multimedia content is classified based on corresponding metadata of the multimedia content. Virtual folders containing the classified content are created. The content is browsed using the virtual folders. In a method of creating virtual folders, a root-node containing a plurality of multimedia content items is created. The root-node is divided into a number of nodes to create first-generation sub-nodes, and each of the first-generation sub-nodes is divided into a number of nodes to create n-th-generation sub-nodes. Nodes having no sub-nodes are created as virtual folders while searching the created nodes ranging from the first-generation sub-nodes to the n-th-generation sub-nodes in a certain sequence. Exemplary embodiments of the present invention can efficiently browse and easily access desired content when there is a large number of content items.

## Description

Methods and apparatuses consistent with the present invention relate to browsing using metadata, and more particularly to a browsing method and apparatus using metadata, which can efficiently browse and search a plurality of multimedia content items through an appliance having a limited input device.

As multimedia compression technology has been making rapid progress along with the increase in the storage capacity of digital storage devices, the amount of multimedia content that can be stored in a related art digital device has also rapidly increased. For example, a portable MP3 player or a personal media layer (PMP) can store several tens of thousand music files, and a home digital video recorder (DVR) can store several tens of thousands of images or video data that can be viewed for up to several hundred hours. Further, as these devices are connected to each other through a network and can share data therebetween, the platform for utilizing the multimedia content has also expanded. A related art method of browsing content having a large amount of multimedia data in this way is described below.

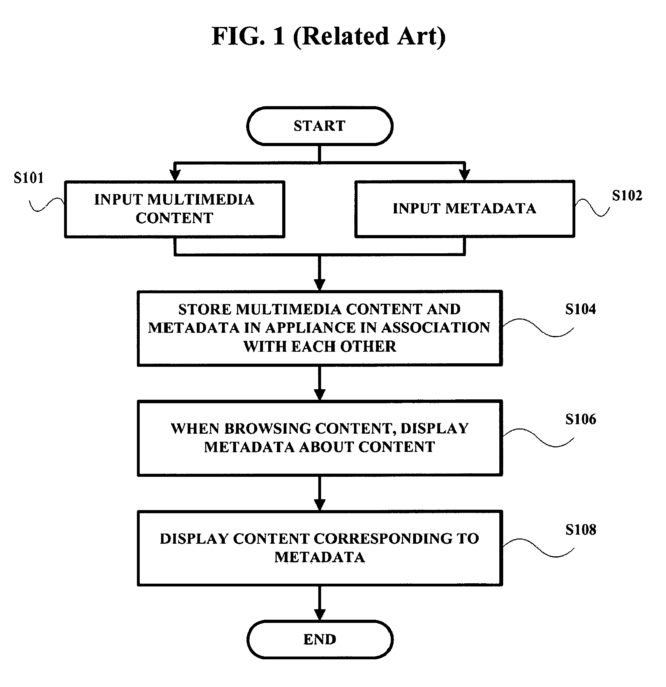

Figure 1 is a flowchart showing a related art process of inputting and browsing multimedia content. When multimedia content is input to an appliance at operation S101, metadata about the content is also input at operation S102. Here, the metadata is additional data for describing information about the multimedia content, and can include data ranging from a file name, a file size, a file creation date to an ID3 tag, attached to Moving Pictures Expert Group (MPEG) Audio Layer 3 (MP3) files, and may contain information such as a title, a composer, a performer's name, a genre or an EXIF tag, attached to Joint Photographic Experts Group (JPEG) files. Such metadata may be extracted using a separate external device and input to the appliance together with the multimedia content, or may be directly extracted by the central processing unit (CPU) of an appliance when multimedia content is input, according to each appliance, at operations S101 and S102.

The multimedia content and its corresponding metadata are stored in the appliance in association with each other at operation S104. When the stored multimedia content is browsed, the metadata is first displayed on a screen at operation S106, and the multimedia content corresponding to the metadata displayed on the screen is accessed and displayed at operation S108.

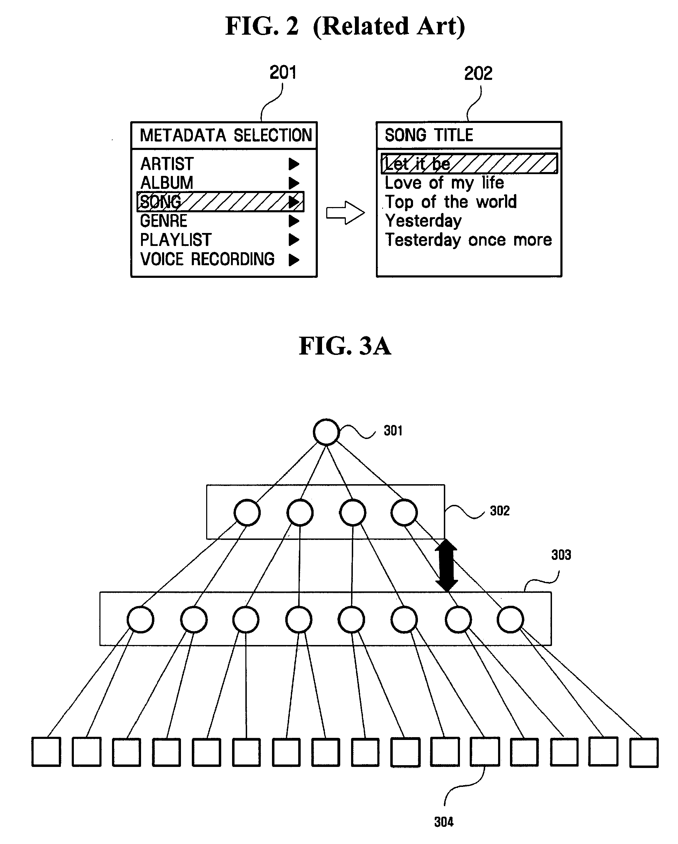

Figure 2 is a diagram showing a related art browsing operation using metadata. A user selects metadata, which is to be a basis at the time of performing browsing, from the display screen of an MP3 player. If the user selects <song>, as in the case of a left-hand metadata selection image 201, prestored metadata is aligned based on song titles in a right-hand song title image 202, and a plurality of titles is displayed on the screen. If a specific song <Let It Be> is selected, multimedia content corresponding to the song is played.

However, most metadata, displayed to the user to enable browsing of multimedia content, corresponds to items of multimedia content rather than corresponding to the actual number of items of the multimedia content in a one-to-one manner, such that as the number of items of multimedia content stored increases, the number of pieces of corresponding metadata increases proportionately. Although metadata is grouped to some degree by artist, album and genre, the number of pieces of metadata also greatly increases. Therefore, as the number of items of multimedia content is increased, browsing efficiency is markedly decreased.

As the amount of multimedia content and the number of items of multimedia content increases, it is becoming more inconvenient for users to find and select desired content from the entirety of multimedia content. In particular, since most portable and home multimedia appliances have an input device with limited functions, such as a simple button or remote controller, as opposed to a keyboard or mouse, this inconvenience is becoming a considerable factor in providing an efficient way of browsing multimedia content.

According to the present invention there is provided an apparatus and method as set forth in the appended claims. Preferred features of the invention will be apparent from the dependent claims, and the description which follows.

The present invention provides a browsing method and apparatus using metadata, which can efficiently browse a plurality of multimedia content items stored in an appliance, to easily and rapidly enable the accessing of desired content by users.

According to an aspect of the present invention, there is provided a browsing method using metadata, including storing multimedia content and metadata about the multimedia content, classifying the multimedia content based on the metadata about the multimedia content, creating virtual folders containing the classified content, and browsing the content using the virtual folders.

According to another aspect of the present invention, there is provided a method of creating virtual folders, including a root-node containing a plurality of all multimedia content items, dividing the root-node into a number of nodes to create first-generation sub-nodes, and dividing each of the first-generation sub-nodes into a number of nodes to create n-th-generation sub-nodes; and creating nodes having no sub-node as virtual folders while searching the created nodes ranging from the first-generation sub-nodes to the n-th-generation sub-nodes in a certain sequence.

According to another aspect of the present invention, there is provided a node division method for creating virtual folders, including selecting a type of metadata to be contained in a corresponding virtual folder, and classifying content corresponding to the selected metadata type based on a similarity determination method, to divide nodes.

According to another aspect of the present invention, there is provided a method of accessing a content database for node division, including obtaining a total number of content items contained in a node to be divided, calculating an average number of content items to be contained in a sub-node branching from the node, skipping records by the calculated average number from a start position of a record and shifting to a target location, reading a record value at the target location, and determining a location of a node boundary with respect to the read recorded value.

According to another aspect of the present invention, there is provided a browsing method using metadata, including browsing content based on metadata in a corresponding virtual folder, as a result of the browsing, creating separate virtual folders and storing content items corresponding to the metadata in the separate virtual folders, and creating a content list using the content items stored in the created virtual folders by a user's selection.

According to another aspect of the present invention, there is provided a browsing apparatus using metadata, including storage means for storing therein multimedia content and metadata about the multimedia content, classification means for classifying the multimedia content based on the metadata about the multimedia content, virtual folder creating means for creating virtual folders containing the classified content, and browsing means for browsing the multimedia content using the virtual folders.

The above and/or other aspects of the present invention will be more clearly understood from the following detailed description of exemplary embodiments in conjunction with the accompanying drawings, in which:
Figure 1 is a flowchart showing a related art process of inputting and browsing multimedia content;
Figure 2 is a diagram showing a related art browsing operation using metadata;
Figure 3A is a diagram showing the concept of a virtual folder according to an exemplary embodiment of the present invention;
Figure 3B is a diagram showing a browsing operation using virtual folders, applied to an MP3 player, according to an exemplary embodiment of the present invention;
Figure 4 is a diagram showing a browsing apparatus using metadata according to an exemplary embodiment of the present invention;
Figure 5 is a flowchart of a browsing method using metadata according to an exemplary embodiment of the present invention;
Figure 6 is a diagram showing the comparison of the cases where a browsing operation using virtual folders is applied to an MP3 player and to a digital video recorder (DVR), respectively, according to an exemplary embodiment of the present invention;
Figures 7A to 7D are diagrams showing a process of creating virtual folders according to an exemplary embodiment of the present invention;
Figure 8A and 8B are diagrams showing a node division method for creating virtual folders according to an exemplary embodiment of the present invention;
Figure 9A and 9B are diagrams showing a method of accessing a content database for node division according to an exemplary embodiment of the present invention; and
Figure 10 is a diagram showing the entire flow of a content browsing system according to an exemplary embodiment of the present invention.

Hereinafter, exemplary embodiments of the present invention will be described in detail with reference to the attached drawings. Reference is made to the drawings, in which the same reference numerals are used throughout the different drawings to designate the same or similar components.

Figure 3A is a diagram showing the concept of a virtual folder according to an exemplary embodiment of the present invention. Rectangles 304 indicated at the lowest level are assumed to be multimedia content to be browsed. Since a related art scheme sequentially browses the content, browsing efficiency inevitably decreases as the number of items of content increases. In contrast, the exemplary embodiment is implemented by creating index nodes, such as nodes 302 and 303, between nodes, and by accessing content through the index nodes after content items have been aligned on the basis of a specific metadata value, thus substantially improving the browsing efficiency.

For example but not by way of limitation, if four index nodes 302 are created, all content items are divided and put into four folders 302, and respective folders are opened, so that content belonging to a corresponding folder can be immediately accessed. In this case, because such a folder does not occupy a physical space, the folder does not actually exist, but virtually performs the function of a folder. Thus, the index folder is referred to as a virtual folder.

Each virtual folder at level 302 may have virtual folders having higher density, which are sub-nodes, at level 303. Such a virtual folder may be connected to actual content. Therefore, even though the number of content items increases drastically, arbitrary content can be rapidly accessed through several layers of virtual folders, which are created in a hierarchical structure, in a downward direction.

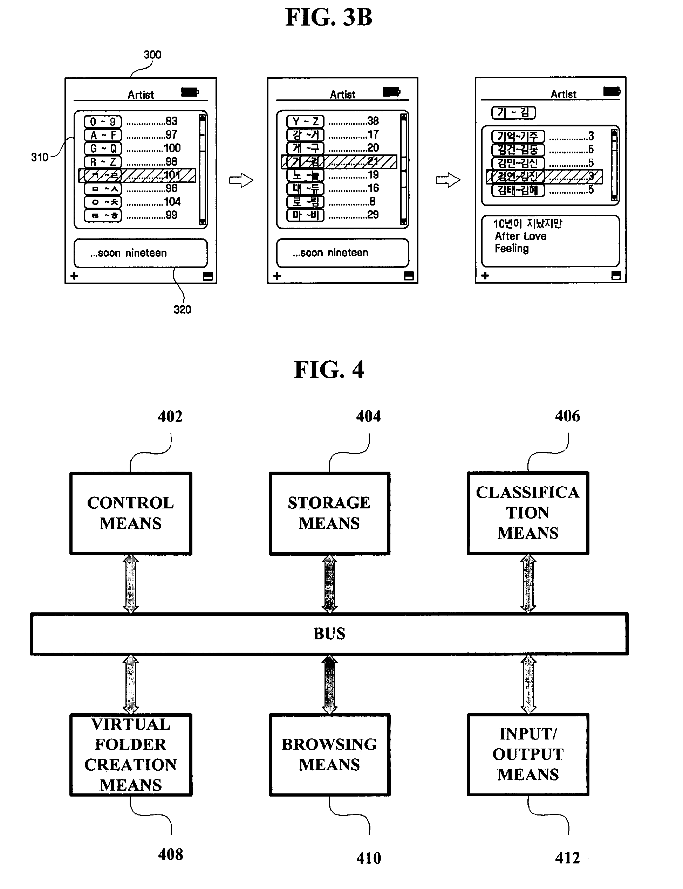

Figure 3B is a diagram showing a browsing operation using virtual folders, applied to an MP3 player, according to an exemplary embodiment of the present invention. An entire screen 300 on the left-hand side of Figure 3B is divided into a screen 310 on which virtual folders are displayed, and a screen 320 on which content items are displayed. On the virtual folder screen 310, content items displayed as metadata are dynamically grouped and are displayed in the format of folders. In this case, the number of content items belonging to each corresponding folder is also displayed. At the initial stage of the virtual folder screen 310, a certain number of virtual folders that can be displayed on a single screen, as shown in the left-hand diagram, are created and displayed. A selected item, which is highlighted and displayed in black, exists, and can be changed through the manipulation of a key (for example, an up/down key).

If a selected item is changed on the virtual folder screen 310, the content screen 320 is displayed in association with the virtual folder screen 310 so as to display the content items of a currently selected folder. Through this operation, all content items can be scrolled through and displayed simply, with only a few key manipulations, even through the amount of content is large.

Meanwhile, through the manipulation of a key (for example, a left/right key) by the user, the density of virtual folders can be increased or decreased. The center screen of Figure 3B shows that the density of virtual folders is increased by one level. If the density of virtual folders is increased, the number of folders is also increased, and the number of content items belonging to each folder is decreased. In contrast, if the density of virtual folders is decreased, the number of folders is decreased, and the number of content items belonging to each folder is increased. This is the same concept as that of the case where the level of index nodes is adjusted to be high or low in Figure 3A.

Through the manipulation of a key (for example, an Enter/Esc key) by the user, the user can open or close the folder. A screen on the right-hand side of Figure 3B shows the opening a folder 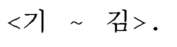 If the user opens the virtual folder, the current folder is displayed on the upper portion of the screen, and is further densely divided and displayed on the virtual folder screen 310, and only content items belonging to the current folder are selected and displayed on the screen 320 for displaying content items.

Through the manipulation of a key (for example, a TAB key), an input pointer can be switched between the screen 310 on which virtual folders are displayed and the screen 320 on which content items are displayed. A user can sufficiently view screen variations based on the key input, by expanding the size of the screen on which a pointer is displayed and by reducing the size of the screen on which a pointer is not displayed. If a display window is too small to divide the entire screen into the screen 310 on which virtual folders are displayed and the screen 320 on which content items are displayed, a method can be implemented for switching the entire screen to the screen on which virtual folders are displayed and the screen on which content items are displayed, through the manipulation of a key by the user, or a method of allowing the screen on which virtual folders are displayed to appear as a pop-up window through the manipulation of a key by the user, instead of a method of switching an input pointer.

If an input pointer is present on the screen 320 on which content items are displayed, a selected item is highlighted and displayed on the screen 320. Through the manipulation of a key (for example but not by way of limitation, an up/down key) by the user, the selected item can be changed. Even when the selected item is changed on the screen 320 on which content items are displayed, the screen 310 on which virtual folders are displayed is scrolled in association with the screen 320 to allow virtual folders containing a selected item to appear on the screen 310.

Figure 4 is a diagram showing a browsing apparatus using metadata according to an exemplary embodiment of the present invention. The browsing apparatus includes a control means 402 (e.g., a control device or controller as understood by those skilled in the art), a storage means 404 (e.g., a storage device as would be understood by those skilled in the art), a classification means 406 (e.g., a classification device as would be understood by those skilled in the art), a virtual folder creating means 408 (e.g., a virtual folder creation device as would be understood by those skilled in the art), a browsing means 410 (e.g., a browser as would be understood by those skilled in the art) and an input/output means 412.

The storage means 404 functions to store multimedia content and metadata about the content under the control of the control means 402. The classification means 406 functions to classify content based on the metadata about the content. The virtual folder creating means 408 functions to create virtual folders containing the classified content. The browsing means 410 functions to browse the content using the virtual folders. In detail, metadata about content in the virtual folders is searched, and thus the stored content is browsed.

The structures that perform the claimed functions for the foregoing means may include those structures as understood by one of ordinary skill in the art. For example but not by way of limitation, the structure of the input/output means 412 includes an input device, such as a remote controller, and an output device, such as a display device such as a liquid crystal display (LCD) or plasma display panel (PDP), or a speaker, and performs an input/output operation under the control of the control means 402. The control means 402 functions to control all of the above-described means. However, the structure of any of the means disclosed with respect to FIG. 4 is not limited thereto, and equivalent structures as would be understood by one skilled in the art may be substituted for the foregoing described structure.

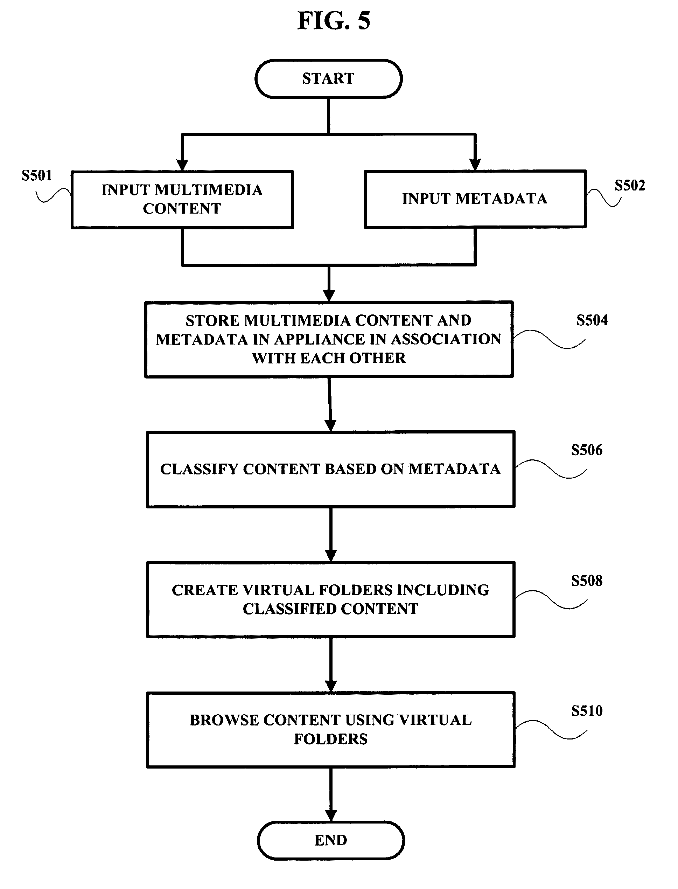

Figure 5 is a flowchart showing a browsing method using metadata according to an exemplary embodiment of the present invention. First, multimedia content and metadata about the content are simultaneously or sequentially input at operations S501 and S502. Further, the content and the metadata are stored in an appliance in association with each other at operation S504. The content is classified into a plurality of groups based on the metadata about the content at operation S506. Virtual folders containing the classified content corresponding to respective groups are created at operation S508. The content is browsed using the virtual folders at operation S510.

In particular, such a browsing operation is performed to browse content corresponding to metadata by searching for the metadata about content contained in each virtual folder, as described above. In this case, a screen on which content belonging to the virtual folder is displayed and a screen on which the virtual folder is displayed are simultaneously displayed on a display screen. Further, the two screens can be mutually associated with each other. More specifically, if the location of an input pointer is shifted on the virtual folder screen 310, the lower content display screen 320 is also changed in association with the input pointer, whereas if the location of the input pointer is shifted on the lower content display screen 320, the upper virtual folder screen 310 is also changed in association with the input pointer.

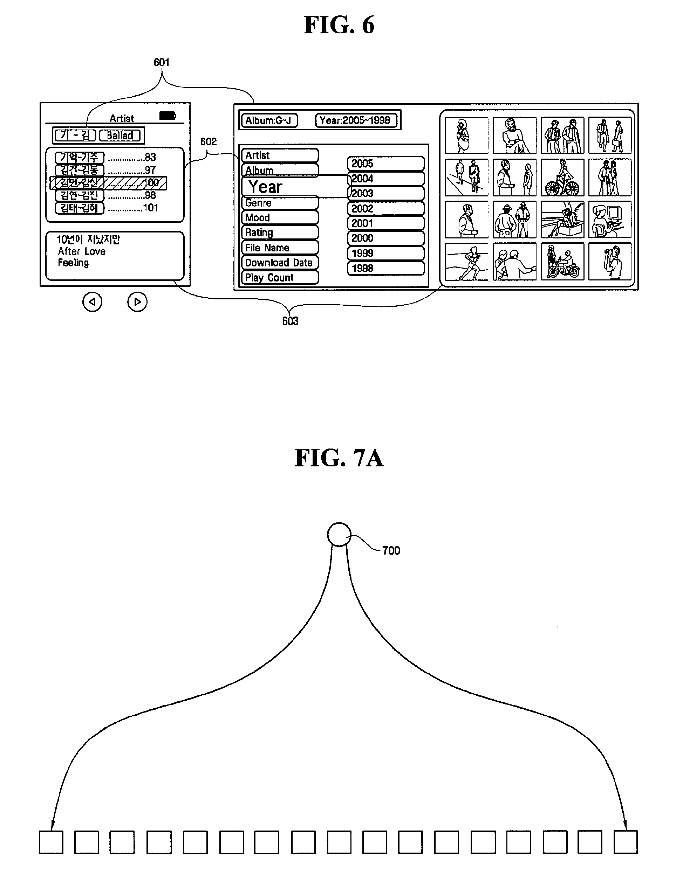

Meanwhile, virtual folders can be created in all nodes, but nodes in a layer directly connected to content are generally created as virtual folders to improve browsing efficiency. That is, of nodes having a hierarchical structure ranging from a single root-node to lowest terminal nodes, nodes in a layer that has no sub-node and directly includes multimedia content are output as virtual folders. The method of creating the virtual folders will be described in detail with reference to Figures 7A to 7D.

Figure 6 is a diagram showing the comparison of the cases where a browsing operation using virtual folders is applied to an MP3 player and to a digital video recorder (DVR), respectively, according to an exemplary embodiment of the present invention. Upper parts 601 on a screen indicate current virtual folders, which a user may open, and center parts 602 indicate screens on which virtual folders are displayed. In the case of application to a DVR, content is browsed for each creation year, and virtual folders can be created and output based on a plurality of metadata such as artist, album, genre, mood, rating, file name, download date, latest play date or play count. Further, lower parts 603 indicate screens on which content items, varying depending on each virtual folder screen, are displayed. In an MP3 player on the left-hand side of FIG. 6, content corresponds to music, so that the titles of songs are displayed, whereas, in the DVR on the right-hand side of Figure 6, content corresponds to video or image data, so that a thumbnail, a small sample image, is displayed.

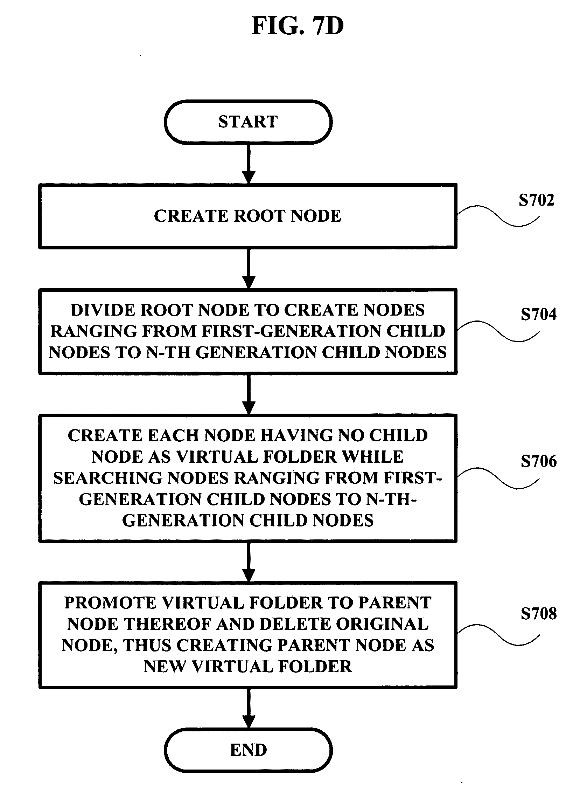

Figures 7A to 7D are diagrams showing the flow of a process of creating virtual folders according to an exemplary embodiment of the present invention. Figures 7A to 7C illustrate the concept of creating virtual folders. The concept of creating virtual folders is described with reference to Figure 7D.

Virtual folders are implemented to create hierarchical indices capable of adjusting density, and are then constructed in a tree structure. In the tree structure, the lowest terminal nodes (leaf nodes) correspond to multimedia content, and the remaining nodes correspond to virtual folders. In the tree structure, an initial stage is implemented to allow a single-root-node to designate the entire content, from its start to end positions, as shown in Figure 7A. This means that a virtual folder, expressed as the root-node, includes entire content. First, the root-node, containing a plurality of all multimedia content items, is created at operation S702, as illustrated in Figure 7D. In addition, each node has pointers for designating a sub-node, a parent node and a sibling node to maintain the tree structure. The pointers are initialized to NULL states in the current state.

Next, the root-node is divided into a number of nodes to create first-generation sub-nodes, each first-generation sub-node is divided into a number of sub-nodes to create second-generation sub-nodes, each second-generation sub-node is divided to create third-generation sub-nodes, and so on. By repeating such a procedure, n-th-generation sub-nodes are created at operation S704.

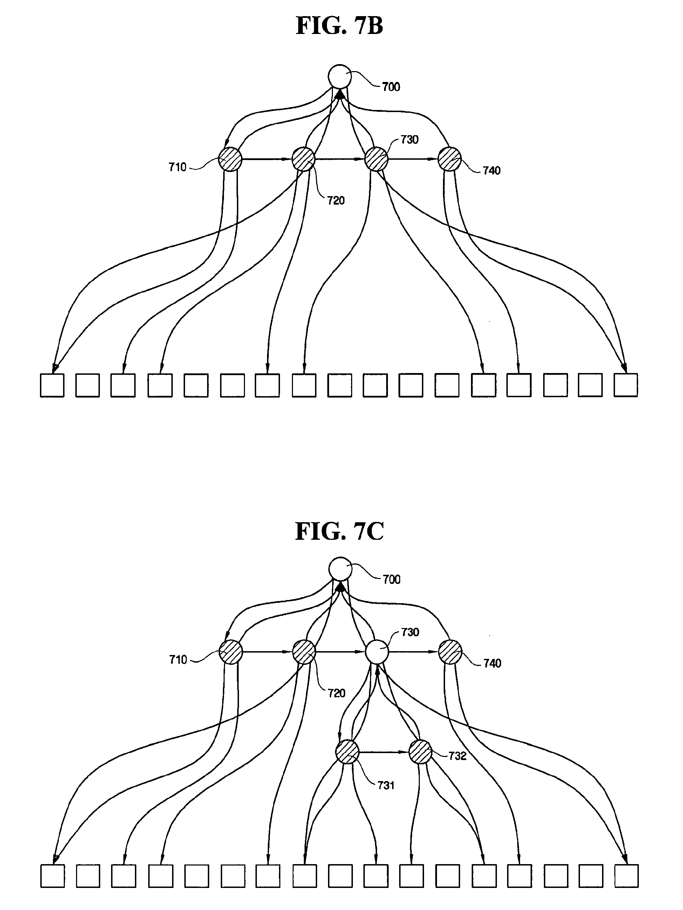

Since an indexing effect cannot be absolutely obtained using only the root-node, the density of the root-node is increased by one level, as shown in Figure 7B. The increase in the density of a certain node means that the node is divided into a plurality of sub-nodes. Since the number of sub-nodes to be branching from each node at the time of increasing the density is determined depending on the number of items that can be displayed on a single screen, the number of sub-nodes can vary according to each application program. If a node is divided, start/end positions, indicating content, are designated and the pointers of sub-nodes, parent and sibling nodes are designated, as shown in Figure 7B.

Thereafter, each node having no sub-node in a lower layer is created as a virtual folder, while nodes ranging from the first-generation sub-nodes to the n-th-generation sub-nodes are searched in certain sequence at operation S706. In this case, the sequence can be defined by user's setting. In the exemplary embodiment of the present invention, the may be (but is not limited to) a sequence of conducting a vertical search, in which nodes ranging from the root-node to sub-nodes in lower layers are searched, and then conducting a horizontal search, in which the sibling nodes of the sub-nodes are searched, is implemented. That is, when density is changed, nodes having sub-nodes in NULL states are output as virtual folders while nodes are searched in the sequence of the root-node, sub-nodes and sibling nodes. FIG. 7B shows that four folders 710, 720, 730 and 740 in an intermediate layer are output as virtual folders.

Figure 7C shows an exemplary embodiment in which the density of nodes is increased by one level. The node indicated by 730 in Figure 7B is divided into two sub-nodes 731 and 732. Through the above method, since only nodes having no sub-nodes are output as virtual nodes, nodes 710, 720, 731, 732 and 740 are output as virtual folders.

Even after the virtual folders have been created through the above method, the density of virtual folders can be changed again. If a layer of nodes is vertically promoted or demoted, the density of virtual folders is changed. As the node layer is demoted to a lower layer, density is increased, whereas, as the node layer is promoted to a higher layer, density is decreased. In order to decrease density, if a node layer is promoted from a created virtual folder to the parent node thereof, and the virtual folder, which is an original node, is deleted, the parent node is created as a new virtual folder at operation S708. That is, if density is decreased at the node 731 or 732, a node layer is promoted to the parent node 730 thereof to delete the sub-nodes 731 and 732, so that a node state returns to the state of Figure 7B, thus decreasing the density of the virtual folders.

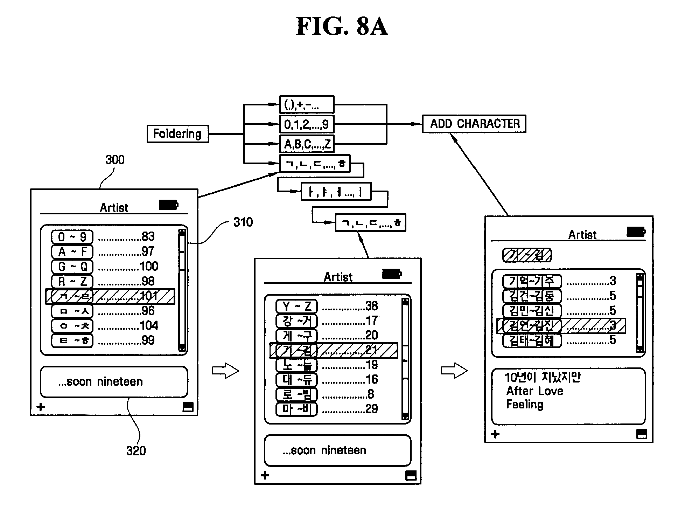

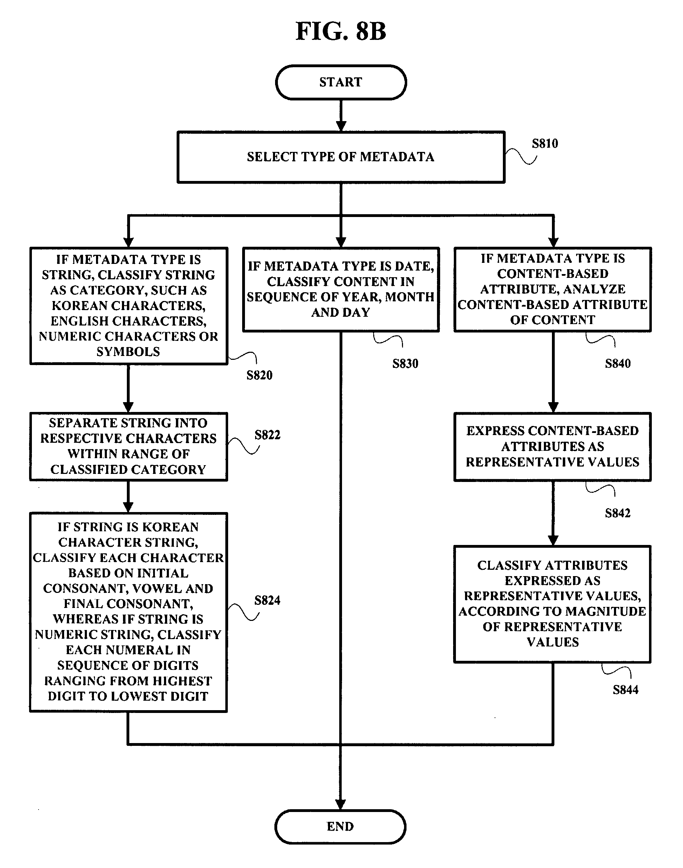

Figure 8A and 8B are diagrams showing a node division method for creating virtual folders according to an exemplary embodiment of the present invention.

As shown in Figure 7A, virtual folders are created by vertically dividing each node, starting from a root-node, which includes the entire content having start/end positions. A simple method of dividing a node containing N content items into M sub-nodes is to equally divide the node to allow respective sub-nodes to equally include N/M content items. However, in this case, content items having a similar attribute may be divided into and included in different nodes, and content items having different attributes may be mixed and included in the same node. Since a virtual folder functions as an index to rapidly access content, respective folders may have an equal number of content items if possible, content items included in a single folder may have a similar attribute if possible, and content having other attributes, if present, is shifted into another folder.

Therefore, the type of metadata to be expressed in each virtual folder is first selected at operation S810, and content corresponding to the selected metadata type is classified based on a similarity determination method, thereby dividing nodes. This similarity determination method is described according to the type of metadata.

First, if the type of metadata is a string, the similarity determination method classifies the string as a category, such as Korean characters, English characters, numeric characters or symbols, at operation S820. The string is separated into respective characters within the range of the classified category to determine the similarity thereof again at operation S822. For example, if the string is a Korean character string, each character is classified based on an initial consonant, a vowel and a final consonant, whereas if the string is a numeric string, each numeral is classified in the sequence of digits ranging from the highest digit to the lowest digit at operation S824. That is, when a virtual folder expresses a string, the following two conditions are applied.

First, since a string is classified alphabetically, the string is separated into respective characters, and high priority is assigned to a preceding character at the time of determining similarity. In the case of Korean characters, a single character is separated into an initial consonant, a vowel and a final consonant, and then high priority is assigned to an initial consonant appearing in a preceding character at the time of determining similarity. If initial consonants are substantially identical to each other, vowels are compared to each other, and final consonants are compared to each other if the vowels are also substantially identical to each other.

Second, parts having considerably different attributes within a string, such as symbols, numeric characters, English characters or Korean characters, are classified as a wide category. The appearance of another character deviating from the boundary of the category is considered to have lower similarity than the appearance of another character within the category.

A node division method, for the creation of virtual folders to combine the above two conditions and band together content items having higher similarity in the case of a string, is described in detail with reference to Figure 8A. Node division for the creation of folders is determined based on initial characters. If initial characters are different from each other, it is determined that the characters have low similarity. In particular, categories are set to differentiate symbols, numeric characters, English characters or Korean characters. If a variation exceeding the boundary of the categories is present, it is determined that similarity is greatly decreased. If required density cannot be obtained as a result of the determination of the similarity between initial characters, required density is obtained by separating a Korean character into an initial consonant, a vowel and a final consonant and adding each phoneme in the case of a Korean character, and by adding each character in the case of a numeric character, an English character or a symbol.

For example but not by way of limitation, if the density of virtual folders is at its lowest as in the case of the left-hand screen of FIG. 8A, nodes are divided using only initial characters so that characters, such as symbols, numeric characters, English characters or Korean characters belonging to different categories, are not included in the same folder. In Figure 8A, it can be seen that nodes are classified into a numeric category containing numerals ranging from 0 to 9, English character categories that include English characters respectively ranging from A to F, G to Q and R to Z, and Korean character categories that include consonants respectively ranging from 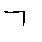 to 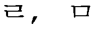 to 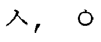 to 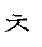 and 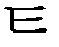 to 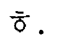 Figure 8A shows that an item corresponding to the Korean character category of 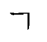 to 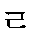 is selected. It can be seen that, if density is increased by one level, nodes are divided as in the center screen of Figure 8A even in consideration of vowels subsequent to initial consonants. Similar to this, the right-hand screen of Figure 8A has a greater density than that of the center screen, and shows that a single character is added to each initial character to obtain required density. Similar to this, when a virtual folder expresses a numeral, the same effect can be obtained by dividing nodes in the sequence of the digits of the numeral ranging from the highest digit to the lowest digit.

If the type of metadata is a date, the similarity determination method determines similarity in the sequence of year, month and day at operation S830. That is, nodes are divided in such a way that the nodes are first divided in consideration of year, are divided in consideration of month if required density cannot be obtained from year, and are then divided in consideration of day if required density cannot be obtained from month, thus enabling each divided node to maintain attributes as uniform as possible.

If node division is further applied, a content-based attribute can be expressed in the form of a virtual folder. In this case, the term "content-based attribute" means a visual attribute, such as the color, texture or shape of content, and an auditory attribute, such as the timbre, tempo, melody, rhythm or mood of content.

If the type of metadata is a content-based attribute, the similarity determination method analyzes the content-based attribute of the content using a signal processing technique at operation S840, groups the analyzed content-based attribute according to similarity, and expresses grouped attributes as the representative values of the groups at operation S842. Further, the attributes, expressed as the representative values, are classified according to the magnitude of the representative values, and thus nodes are divided at operation S844.

For example but not by way of limitation, a color histogram, which is one of content- based attributes indicating color, is generally expressed in 64 to 256 numerals. If content is grouped by the color histogram, and virtual folders are expressed as the representative values of groups, the virtual folders corresponding to red, green, blue, etc. are created when density is low, and the folders can be divided into virtual folders corresponding to red, orange, yellow, green, blue, violet, etc., when density is increased.

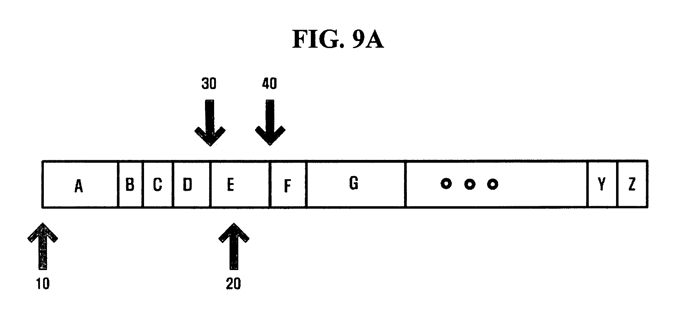

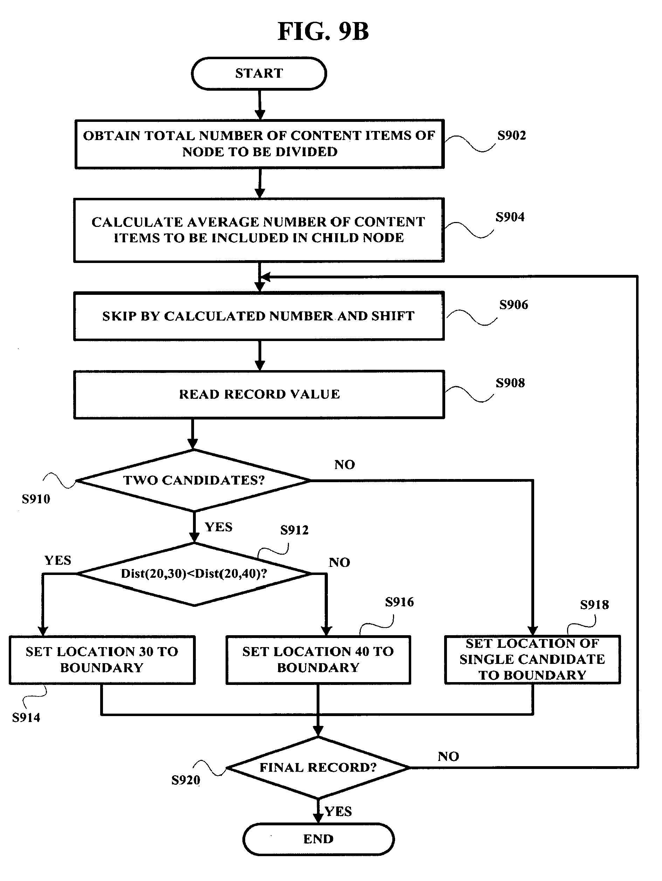

Figures 9A and 9B are flowcharts of a method of accessing a content database for node division according to an exemplary embodiment of the present invention. Since metadata about the content is stored in a database, it is important to efficiently access a database, obtain information about divided nodes, and create virtual folders through the divided node information. The method of accessing the content database for node division is described in detail with reference to Figures 9A and 9B.

It is assumed that a database having the record arrangement of Figure 9A exists. In Figure 9A, parts indicated by capital letters "A" and "B" show the relative amount of content starting with English characters A and B. A state in which a node containing A to Z is divided into M sub-nodes in consideration of assuming only initial characters.

First, the total number of content items included in a node to be divided is obtained at operation S902. That is, the total number of records N ranging from A to Z is obtained from the database of content items. Since the average number of content items to be included in a single sub-node is calculated by N/M, the average number of content items to be included in sub-nodes branching from the node is calculated at operation S904. Further, records, the number of which is the calculated number N/M, are skipped from a location 10, which is the start position of a record, and a shift to a target location 20 is performed at operation 906. N/M is designated as a hop size to indicate the size of skipped records.

Thereafter, at the location 20, which is the target location, a record value is read at operation S908. It is determined whether both record values at the left and right boundaries of the read record value are set to candidates or whether one of the records at the left and right boundaries is set to a candidate at operation S910.

In this exemplary embodiment, a string starting with "E" is obtained, and the candidate value of a node boundary must be determined considering that a value at the start location 10 is a string starting with "A". A case having only a single candidate will be described later, but, when a single candidate exists, the location of the single candidate is set to a boundary at operation S918.

If the number of candidates is two, that is, location 30 and location 40, the procedure differs. First, the following description is conducted based on the case where the two candidate locations 30 and 40 are obtained.

If a value at location 20, to which records in the database are skipped by a hop size, is a string starting with "E", the location at which strings starting with "E" start to appear or, conversely, terminate, may be a boundary at which the node can be divided. Since the location at which a string starting with "E" terminates is the location at which a string starting with "F" starts to appear, the candidates of a node boundary are E and F if the function of detecting the locations of the candidates of a node boundary is defined by detecting the start position of a string starting with a certain character. Since the number of candidates of a node boundary is two, the start positions of the two candidates, that is, locations 30 and 40, are detected. Thereafter, the distances between respective locations 30 and 40 and the record value 20 at the first target location are compared to each other at operation S912. The divided nodes may include a similar number of content items so that of the two candidate locations 30 and 40, the location at which the number of content items included in the node is closer to a hop size (that is, N/M), that is, the location closer to the location 20, is selected as the location of a node boundary.

That is, if the distance between locations 30 and 20 is shorter than the distance between locations 40 and 20, location 30 is set to the boundary at operation S914, otherwise location 40 is set to the boundary at operation S916.

After operations S914, S916 and S918 have been performed, it is determined whether a current record is a final record at operation S920. If the current record is not a final record, the process returns to operation S906 to repeat the above procedure, whereas if the current record is the final record, it is determined that the corresponding node has been completely divided.

Meanwhile, a method of determining the candidate of a node boundary is described in detail.

To determine the candidate value of a node boundary, values at the start position 10 and the end position 20 in Figure 9A are required. The candidate value of a node boundary may include the preceding boundary candidate 30 having a value, which is less than location 20, and the subsequent boundary candidate 40 having a value, which is equal to or greater than location 20. Depending on the circumstances, only one of the two candidates may be a real candidate. For example but not by way of limitation, similar to the above description, when a virtual folder expresses a string and is divided in consideration of only initial characters as the density of a current node, the location at which a string starting with "A" terminates will be a node boundary if the value obtained at location 10 is a string starting with "A" and the value obtained at location 20 is a string starting with "A". Accordingly, only the subsequent boundary candidate 40 exists.

Meanwhile, if the value obtained at location 10 is a string starting with an English character and the value obtained at location 20 is a string starting with a Korean character, a boundary must be made only once, at the location at which the English characters terminate. Accordingly, only the subsequent boundary candidate 30 exists, and this value is the final value of an English character field.

When nodes are divided in this way, the following two restrictive conditions are applied. First, in order to improve the indexing effect, respective nodes may include an equal number of content items if possible. Second, in order to intuitively select a virtual folder containing the user's desired content, content items having a similar attribute may belong to each node if possible.

Therefore, to satisfy the first restrictive condition, the records of the database are skipped by a hop size, and the candidates of a node boundary are found from the surroundings of the target location. Further, to satisfy the second restrictive condition, the candidates of a boundary are separately detected from the surroundings of the target location without the node being directly divided at the target location, so that content items having a similar attribute are grouped together. By adopting a location closer to the target location, skipped to by a hop size, as a boundary candidate when the number of boundary candidates is two, each node can include content items, the number of which is similar to each other, so that the first restrictive condition is reflected again.

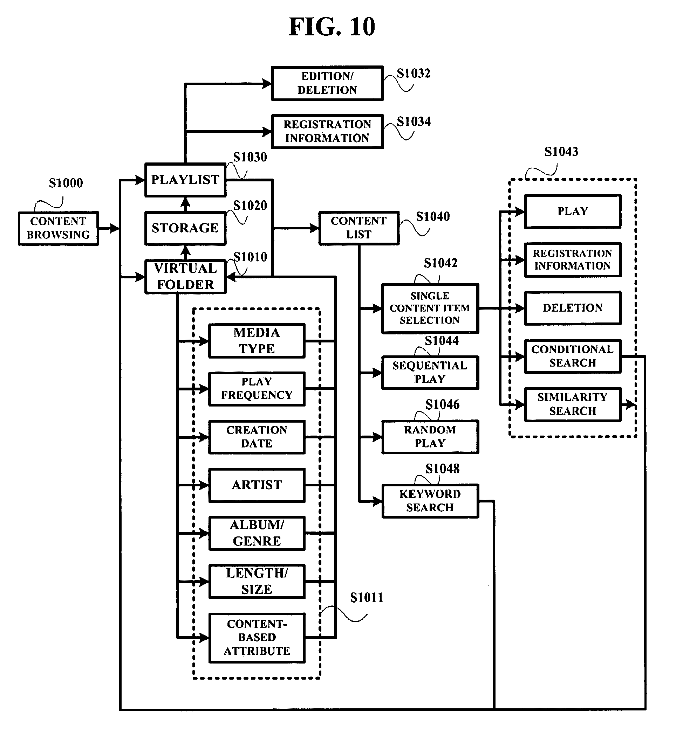

A system for browsing and searching multimedia content is described with reference to Figure 10, which is a diagram showing the entire flow of a content browsing system according to an exemplary embodiment of the present invention.

A content browsing operation S1000 is started by browsing a virtual folder or a playlist at operations S1010 and S1030. The browsing of the virtual folder at operation S1010 is a scheme of indexing metadata added to content and accessing grouped content as if accessing the folder, as described above. Since various types of metadata are added to multimedia content, the browsing of the virtual folder at operation S1010 can be performed through various types of metadata, such as media type, play frequency, creation date, artist, album/genre, length/size or content-based attribute.

Since the conditions of the browsing and search using the metadata can overlap, and results obtained by the browsing and search can be browsed in the form of a virtual folder, an arrow output from the virtual folder is displayed to be recurrently returned to the virtual folder itself. For example but not by way of limitation, if the user enters a folder <2005> during a browsing operation using <creation date>, only content items having a creation date of 2005 are selected and displayed on the screen. At this time, if the browsing basis is changed to <artist>, content items having a creation date of 2005 are displayed for each corresponding artist. Since a plurality of artists may exist, this browsing operation is performed in the form of a virtual folder. In summary, conditions caused by different types of metadata may overlap during the browsing of the virtual folder, and content items selected by the conditions can also be browsed in the form of a virtual folder.

Each virtual folder is dynamically created depending on the key input by the user according to circumstances, and a list of content items belonging to the virtual folder can be stored at operation S1020. A playlist can be drawn up using the stored list at operation S1030. The playlist may be a list of content items statically stored in a database. In the playlist, content items belonging to the playlist can be browsed, or the function of editing/deleting content items at operation S1032 or identifying registration information at operation S1034 can be performed. Meanwhile, content items in the virtual folder or content items in the playlist can be constituted in the form of a list and be managed thereby at operation S1040.

In the content list, content items existing in the list can be sequentially played at operation S1044 or randomly played at operation S1046. Further, in the content list, the function of conducting a keyword search, etc. can be performed at operation S1048. In order to conduct a keyword search in an appliance lacking a keyboard, the strings of a selected content item are combined in various forms and presented to the user, and the user can select and query one of the various combination forms.

Meanwhile, when one of content items is selected at operation S1042, the content item may be played, or the registration information thereof can be identified or deleted, and a conditional search or similarity search can be conducted at operation S1043.

A conditional search procedure is a method of selecting one of the content items included in the created content list and searching content items based on metadata, other than metadata that is the basis for creating the content list, of the metadata about the selected content item.

For example but not by way of limitation, an operation of searching for content items having the same creation date as that of the selected content, or content items having the same artist as that of the selected content, corresponds to the conditional search. Metadata, which is to be a basis to conduct a conditional search, is designated by the user. The conditional search can be used when desired content is detected during a browsing operation based on genre, and content items having the same artist as the detected content are intended to be searched, that is, when relevant content items are intended to be searched through a path different from a path used to detect certain content.

Meanwhile, the similarity search is a concept similar to the conditional search, but there is a difference in that similar content, not content having identical conditions, is detected. The similarity search is mainly used for a search using a content-based attribute. If content items having a similar content-based attribute are searched, similar type of multimedia content items can be searched. A certain attribute, which is to be a basis to conduct the similarity search, can be designated by the user. However, because the feature of the similarity search is to find similar content items, not precisely identical content items, the certain attribute can be used by universally combining various attributes. In this case, weighting values required for combining the attributes can be automatically determined by a system according to a preset rule.

Since search results are displayed to be browsed through a virtual folder, a list of content items, created as a result of the conditional search or similarity search, can be considered to be a virtual folder or a playlist, and can function as a content list. Accordingly, the process can return to operations S1010 and S1030. That is, the entire construction of the browsing system forms a loop, as shown in Figure 10.

The exemplary embodiments can be realized as computer programs that can be written on a computer-readable recording medium and thus can be executed in a computer device inside of any of the apparatuses described above with respect the exemplary embodiments of the present invention. Examples of the computer-readable recording medium include a magnetic storage medium (e.g., a ROM, a floppy disc, or a hard disc), an optical storage medium (e.g., a CD-ROM or a DVD), and a carrier wave (e.g., a data transmission through the Internet). However, the present invention is not limited thereto.

The exemplary embodiments of the present invention can efficiently browse content items and easily access desired content even though the number of content items is markedly increased when browsing multimedia content using metadata. That is, content can be accessed through virtual folders formed in a tree structure, thus reducing the number of key manipulations required for accessing arbitrary content to the logarithmic scale of the number of content items.

Further, in the exemplary embodiments of the present invention since all manipulations are possible using only 10 or fewer keys, containing up/down and left/right keys, the browsing apparatus and method can be applied to appliances having an input device with a limited function, such as a simple keypad or remote controller.

The effects of the exemplary embodiments of the present invention are not limited to the above-described advantages, and other effects, not described, will be clearly understood by those skilled in the art from the accompanying claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A browsing method using metadata, comprising:
storing multimedia content (304) and metadata related to the multimedia content (304);
classifying the multimedia content (304) based on the metadata related to the multimedia content (304);
creating virtual folders (302, 303) containing the classified multimedia content (304); and
browsing the multimedia content (304) using the virtual folders (302, 303).

2. The browsing method according to claim 1, wherein the browsing the multimedia content (304) using the virtual folders (302, 303) comprises browsing the multimedia content (304) by searching the metadata corresponding to the multimedia content (304) belonging to the virtual folders (302, 303).

3. The browsing method according to claim 1 or 2, wherein the virtual folders (302, 303) are created at nodes (304) in a layer, having no sub-nodes and directly containing multimedia content (304), of nodes (301-304) having a hierarchical structure ranging from a single root-node (301) to lowest terminal nodes (304).

4. The browsing method according to claim 1, 2 or 3, comprising displaying on a display screen (300) both an image (310) on which content belonging to the virtual folders (302, 303) is displayed and an image (320) on which the virtual folders (302, 303) are displayed.

5. The browsing method according to claim 4, wherein the image (310) on which the virtual folders (302, 303) are displayed and the image (320) on which the content (304) belonging to the virtual folders is displayed are displayed in association with each other.

6. The browsing method according to claim 4 or 5, wherein the image (310) on which the virtual folders are displayed and the image (320) on which the content belonging to the virtual folders is displayed comprise input pointers that can be switched between the two images.

7. The browsing method according to claim 6, wherein a size of the image (310, 320) on which the input pointer is displayed is expanded, and a size of the image (320, 310) on which the input pointer is not displayed is reduced.

8. A method of creating virtual folders, comprising:
creating a root-node (700) containing a plurality of all multimedia content items;
dividing the root-node (700) into a first number of nodes (710-740) to create first-generation sub-nodes (710-740), and dividing each of the first-generation sub-nodes (710-740) into a second number of nodes to create n-th-generation sub-nodes (731, 732); and
creating nodes having no sub-nodes as virtual folders while searching the created nodes ranging from the first-generation sub-nodes to the n-th-generation sub-nodes in a certain sequence.

9. The virtual folder creation method according to claim 8, wherein the certain sequence is a sequence in which nodes ranging from the root-node (700) to the sub-nodes (710-740) are searched and then sibling nodes of the sub-nodes are searched.

10. The virtual folder creation method according to claim 8 or 9, further comprising promoting each created virtual folder (731, 732) to a parent node (730) thereof and deleting the virtual folder (730) that is an original node, thus creating the parent node (731, 732) as a new virtual folder.

11. A node division method for creating virtual folders, comprising:
selecting a type of metadata that can be expressed in a corresponding virtual folder (710-740); and
classifying content corresponding to the selected metadata type based on a similarity determination method, to divide nodes (710-740).

12. The node division method according to claim 11, wherein, if the type of metadata is a string, the similarity determination method comprises:
classifying the string as a category, such as one of language characters, numeric characters and symbols; and
separating the string into respective characters within the classified category, to determine similarity.

13. The node division method according to claim 12, wherein, if the string is a language character string, the separating the string is performed to classify each character based on an initial consonant, a vowel and a final consonant.

14. The node division method according to claim 12 or 13, wherein, if the string is a numeric string, the separating the string is performed to classify the numeric string in a sequence of digits ranging from a highest digit to a lowest digit.

15. The node division method according to any of claims 11 to 14, wherein, if the type of metadata is a date, the similarity determination method is performed to determine similarity in a sequence of year, month and day.

16. The node division method according to any of claims 11 to 15, wherein, if the type of metadata is a content-based attribute, the similarity determination method comprises:
analyzing content-based attribute of the content items using a signal processing technique;
expressing the analyzed content-based attribute as a representative value; and
classifying the attribute, expressed as the representative value, according to magnitude of the representative value, to divide nodes.

17. The node division method according to claim 16, wherein the content-based attribute includes a visual attribute comprising at least one of a color, a texture and a shape of the content, and an auditory attribute comprising at least one of a timbre, a tempo, a melody, a rhythm and a mood.

18. A method of accessing a content database for node division, comprising:
obtaining a total number of content items included in a node to be divided;
calculating an average number of content items to be included in a sub-node branching from the node;
skipping records by the calculated average number from a start position of a record and shifting to a target location;
reading a record value at the target location; and
determining a location of a node boundary with respect to the read record value.

19. The content database accessing method according to claim 18, wherein the determining the location of the node boundary comprises:
comparing distances between respective record values at left and right boundaries of the read record value and the read record value with each other; and
determining a candidate, having a shorter distance as a result of the comparison, as the location of a node boundary.

20. A browsing method using metadata, comprising:
browsing content based on metadata in a corresponding virtual folder;
as a result of the browsing, creating separate virtual folders and storing content items corresponding to the metadata in the separate virtual folders; and
creating a content list using the content items stored in the created virtual folders by a user selection.

21. The browsing method according to claim 20, further comprising sequentially playing all content items of the created content list.

22. The browsing method according to claim 20 or 21, further comprising randomly playing all content items of the created content list.

23. The browsing method according to claim 20, 21 or 22, further comprising editing the created content list or identifying registration information thereof.

24. The browsing method according to claim 20, 21, 22 or 23, further comprising:
selecting one content item from the created content list; and
one of playing and deleting the selected content, or identifying registration information thereof.

25. The browsing method according to any of claims 20 to 24, further comprising:
selecting one content item from the created content list; and
searching content items based on metadata, other than metadata that is a basis for creation of the content list, of the metadata about the selected content item.

26. A browsing apparatus using metadata, comprising:
means for storing (404) therein multimedia content and metadata about the multimedia content;
means for classifying (406) the multimedia content based on the metadata about the multimedia content;
means for creating (408) virtual folders containing the classified multimedia content; and
means for browsing (410) the multimedia content using the virtual folders.

27. The browsing apparatus according to claim 26, wherein the means for browsing (410) browses the multimedia content by searching for corresponding metadata of the content belonging to the virtual folders.

28. A browsing apparatus using metadata, comprising:
a storage device (404) that stores therein multimedia content and metadata about the multimedia content;
a classification device (406) that classifies the multimedia content based on the metadata about the multimedia content;
a creating device (408) that creates virtual folders containing the classified multimedia content; and
a browser (410) that browses the multimedia content using the virtual folders.
